# EUROPÄISCHE PATENTSCHRIFT

(11) **EP 2 046 616 B1**
(45) Veröffentlichungstag und Bekanntmachung des Hinweises auf die Patenterteilung: **18.11.2009**
(21) Anmeldenummer: 07765719.5
(22) Anmeldetag: 29.06.2007
(51) Int. Cl.: B60W 10/06, B60W 10/02, B60W 30/18, F16D 48/08

(54) **VERFAHREN ZUR ÜBERWACHUNG EINES ANFAHRVORGANGES EINES KRAFTFAHRZEUGS**
METHOD FOR MONITORING A STARTING PROCESS OF A MOTOR VEHICLE
PROCÉDÉ DE SURVEILLANCE D'UNE OPÉRATION DE DÉMARRAGE D'UN VÉHICULE AUTOMOBILE

(30) Priorität: 29.07.2006 DE 102006035142
(43) Veröffentlichungstag der Anmeldung: 15.04.2009
(73) Patentinhaber: ZF Friedrichshafen AG, 88038 Friedrichshafen (DE)
(72) Erfinder: KRAMER, Rupert, 88048 Friedrichshafen (DE); HERTER, Peter, 88212 Ravensburg (DE); SAUTER, Ingo, Aberdeen, North Carolina 28315 (US)
(86) Internationale Anmeldenummer: PCT/EP2007/056535
(87) Internationale Veröffentlichungsnummer: WO 2008/015059

(56) Entgegenhaltungen:
- WO-A-2004/005744
- DE-A1- 10 221 263
- DE-A1- 19 603 239
- DE-A1- 19 921 920
- DE-A1-102004 023 581
- US-A1- 2003 022 759

## Beschreibung

Die Erfindung betrifft ein Verfahren zur Überwachung eines Anfahrvorganges eines Kraftfahrzeugs, nach der im Oberbegriff von Anspruch 1 näher definierten Art; siehe DE 102 21 263 A.

Automatisierte Schaltsysteme bestehen hinsichtlich ihrer Hauptkomponenten aus konventionellen, gegebenenfalls auch manuell betätigbaren Schaltsystemen, bei denen das Betätigen der Schalt- und/oder Anfahrkupplung zwischen Antriebsmotor und Getriebe sowie das Wählen und Schalten von Getriebegängen über entsprechende Betätigungsmittel automatisiert erfolgt. Diese Betätigungsmittel sind üblicherweise als hydraulisch oder pneumatisch betätigbare Kolben-Zylinder-Anordnungen oder als elektrische Aktuatoren ausgebildet, welche auf Stellmittel für die genannten Getriebefunktionen einwirken. Die Stellmittel können am oder im Getriebe angeordnet sein.

Zur Ansteuerung von hydraulischen bzw. pneumatischen Betätigungsmitteln sind Druckerzeugungs- und Steuerungsvorrichtungen notwendig, die gemäß dem Stand der Technik eine Hydraulik- bzw. Pneumatikpumpe als Druckerzeugungsvorrichtung, einen Druckspeicher und eine hydraulische bzw. pneumatische Steuerungseinheit mit Steuerungsventilen und Sensoren umfassen, welche mit einer zentralen Steuerungs- und Regelungsvorrichtung in Verbindung stehen und von dieser nach dort abgespeicherten Steuerungs- und Regelungsfunktionen ansteuerbar sind.

In der DE 102 30 612 A1 ist ein Antriebsstrang zum Betrieb eines Kraftfahrzeuges offenbart, welcher einen Antriebsmotor, ein Drehmomentübertragungssystem und ein automatisiertes Schaltgetriebe umfasst. Das Drehmomentübertragungssystem ist mittels eines Aktuators automatisiert betätigbar und das Getriebe weist zumindest zwei schaltbare Gänge mit unterschiedlicher Übersetzung auf, wobei zumindest ein Gang des Getriebes als Anfahrgang dient. Ein Anfahrvorgang wird von einem Steuergerät durch die Anwendung einer Anfahrkennlinie gesteuert, welche zumindest zeitweise an eine Anfahrsituation angepasst werden kann.

In der DE 100 31 771 A1 ist ein Kraftfahrzeug mit einer Vorrichtung zur automatisierten Betätigung einer Kupplung offenbart. Der Antriebsstrang des Kraftfahrzeugs weist einen Motor, ein Getriebe, eine Steuereinheit und einen von der Steuereinheit gesteuerten Aktuator zur Betätigung der Kupplung auf. Bei einem Anfahrvorgang wird das von der Kupplung übertragbare Drehmoment erhöht und im Wesentlichen auf einen vorgegebenen Drehmomentwert gesteuert, wobei das von der Kupplung übertragbare Drehmoment vor dem Erreichen der Drehzahlgleichheit zwischen Motordrehzahl und Getriebedrehzahl zumindest kurzfristig erhöht und wieder abgesenkt wird. Hierdurch kann ein komfortableres Anfahren des Kraftfahrzeugs realisiert werden.

Bei automatisierten Schaltgetrieben mit ebenfalls automatisierter Kupplung ist es üblich, dass vorhandene Funktionalitäten mit Hilfe eines Parametersatzes auf einen bestimmungsgemäßen Fahrzeugeinsatz abgestimmt werden. Mit Hilfe des Parametersatzes kann das Fahrverhalten in bestimmten Bereichen beeinflusst werden. Es kann beispielsweise komfort- oder leistungsbetont abgestimmt werden. Bei einer solchen Abstimmung des Fahrverhaltens wird stets unterstellt, dass sich die einbezogenen Bauteile und Aggregate nur innerhalb hinreichend enger Toleranzen verändern. Entsprechende Grenzlagen können in eine solche Abstimmung miteinbezogen werden. Bei bekannten Abhängigkeiten können Adaptionen oder Korrekturkurven verwendet werden, um Einflüsse zu kompensieren, welche das Fahrverhalten verändern würden.

Nachteile des Standes der Technik sind, dass es trotz der erwähnten Arbeits- bzw. Vorgehensweise während der Betriebszeit eines Getriebes zu unvorhersehbaren Abweichungen kommen kann, sodass das Steuerungsprogramm mit dem abgestimmten Parametersatz nicht zu dem gewünschten Fahrverhalten führt. So kann es beispielsweise vorkommen, dass ein Fahrzeug nicht anfahren kann, weil der programmierte Parametersatz nicht geeignet ist, die aktuelle Fahrsituation zu bewältigen. Dies kann beispielsweise dann der Fall sein, wenn sich eine oder mehrere Randbedingungen gegenüber dem abgestimmten Zustand stark verändert haben. Beispielsweise kann das Übertragungsverhalten der Kupplung deutlich geringer, die Motorleistung deutlich schlechter und/oder der Fahrwiderstand deutlich höher sein.

Der vorliegenden Erfindung liegt die Aufgabe zugrunde, ein Verfahren zur Überwachung eines Anfahrvorganges eines Kraftfahrzeuges darzustellen und die Nachteile des Standes der Technik zu beseitigen.

Die der Erfindung zugrunde liegende Aufgabe wird durch ein, auch die kennzeichnenden Merkmale des Hauptanspruchs aufweisendes, gattungsgemäßes Verfahren zur Überwachung eines Anfahrvorganges eines Kraftfahrzeuges gelöst.

Um eine Fahrsituation sicher zu erkennen und gegebenenfalls auch zu beherrschen, kommt erfindungsgemäß ein Anfahrbeobachter zum Einsatz. Unter einem Beobachter wird gemeinhin eine Logik verstanden, die anhand geeigneter Signale beobachtet, ob von einer entsprechenden Funktion in einem Steuergerät die Ereignisse bzw. Abläufe eintreten, für deren Zweck die Funktion eingesetzt wurde.

Erfindungsgemäß soll der Anfahrbeobachter erkennen, ob sich ein Fahrzeug auch tatsächlich in Bewegung setzt, wenn der Fahrer anfahren möchte. Der Anfahrbeobachter hat dabei folgende Aufgaben:
- Erkennen, ob eine Anfahrt erwünscht ist,
- Erkennen, ob eine Anfahrt erfolgt,
- Einleiten von Maßnahmen, die ein Anfahren begünstigen, falls trotz Anfahrwunsch keine Anfahrt erfolgt und
- Schutz der Aggregate bei misslungener Anfahrt.

Ein eindeutiger Anfahrwunsch kann vom Fahrpedalwinkel abgeleitet werden. Ist der Fahrpedalwinkel sehr groß, beispielsweise größer als 90 %, so geht der Anfahrbeobachter von einem eindeutigen Anfahrwunsch aus. Liegt ein eindeutiger Anfahrwunsch vor, so führt eine hinterlegte Normalfunktion der Steuerung mit entsprechendem Parametersatz in der Regel innerhalb einer messbaren Zeit dazu, dass sich das Fahrzeug in Bewegung setzt. Setzt sich das Fahrzeug trotz des Anfahrwunsches innerhalb einer vorgebbaren Beobachtungszeit nicht in Bewegung, so werden durch den Anfahrbeobachter im Steuerprogramm Maßnahmen eingeleitet, die sich vom Normalbetrieb unterscheiden.

Es können folgende Maßnahmen ergriffen werden, um das Anfahren zu begünstigen:
- Anheben der Motorsolldrehzahl und gegebenenfalls leichtes Öffnen der Kupplung. Dieser Vorgang entspricht der Abhilfemaßnahme, die eventuell ein Fahrer mit handgeschaltetem Getriebe und vorhandenem Kupplungspedal ausführen würde, um ein Anfahren zu erzielen. Dies führt in der Regel dazu, dass der Motor ein höheres Moment aufbauen kann, als üblicherweise im Normalbetrieb notwendig ist. Diese Maßnahmen können beispielsweise zyklisch wiederholt werden. Durch die Erhöhung der Motordrehzahl kann eine Anfahrt bei höheren Momenten als im Normalbetrieb stattfinden. Das leichte Öffnen der Kupplung ist hierbei nicht zwingend erforderlich.
- Es wird weiterhin beobachtet, ob in Verbindung mit den eingeleiteten Maßnahmen (erhöhen der Motorsolldrehzahl und gegebenenfalls leichtes Öffnen der Kupplung) eine Anfahrt erfolgt. Ist dies nicht der Fall, so kann nach einer weiteren Zeit die Kupplung zwangsgeschlossen werden, um das am Motor anliegende, höhere Moment zügig an die Räder des Fahrzeuges zu übertragen. Der eventuell im Normalbetrieb geregelte Vorgang wird hierbei durch einen gesteuerten Vorgang ersetzt.

Führen diese beiden Maßnahmen (Erhöhen der Motorsolldrehzahl und gegebenenfalls leichtes Öffnen der Kupplung sowie das Zwangsschließen der Kupplung) nicht zum Anfahren des Kraftfahrzeugs, so wird abschließend dafür gesorgt, dass die zur Anfahrt benötigten Bauteile vor Zerstörung geschützt werden, insbesondere die Kupplung und der Motor. Dazu wird nach einerweiteren Zeitdauer und/oder beim Überschreiten eines Schwellwertes für die eingetragene Kupplungsenergie das Motormoment per Motoreingriff über beispielsweise einen Datenbus zurückgekommen Dies führt entweder zu einer Anfahrt oder zum Abwürgen des Motors. Nach einer Zurücknahme des Fahrpedals wird dieser Zustand bzw. werden die eingeleiteten Maßnahmen wieder aufgehoben und es können weitere Anfahrversuche durchgeführt werden.

Im Folgenden wird das Grundprinzip der Erfindung, welche mehrere Ausführungsformen zulässt, an Hand einer Zeichnung beispielhaft näher erläutert.

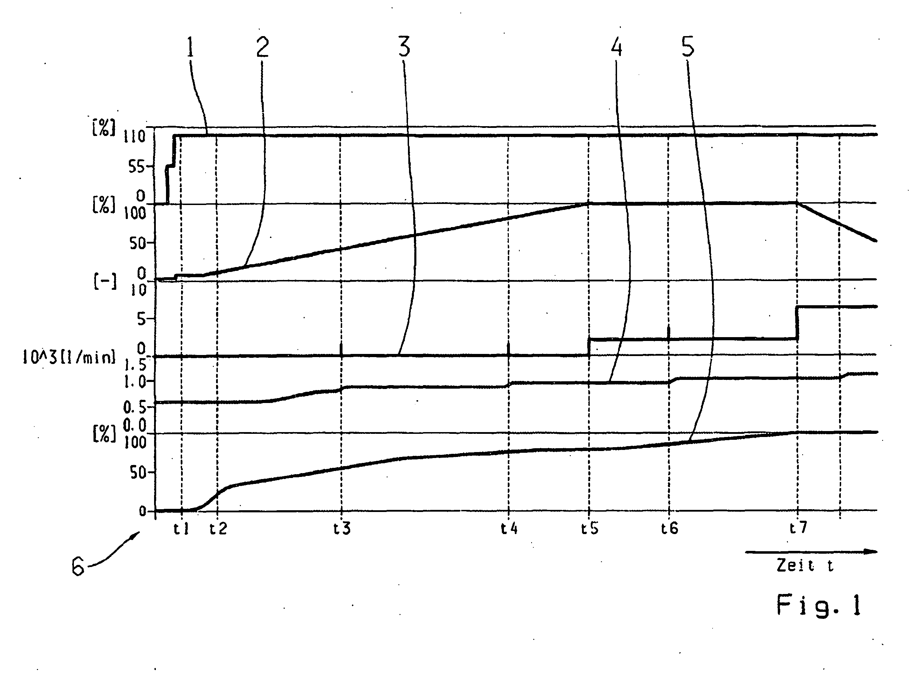

Die einzige Figur dieser Zeichnung zeigt eine Darstellung verschiedener Fahrzeuggrößen als Funktion der Zeit t. In einem Diagramm 6 sind die Kennlinien für die Fahrpedalstellung 1, das Motormoment 2, die Motorsolldrehzahl 4. die Kupplungsposition 5 sowie eine Kennlinie 3 dargestellt, aus der die eingeleiteten Maßnahmen.ersichtlich werden. Zum Zeitpunkt t1 geht der Anfahrbeobachter von einem eindeutigen Anfahrwunsch aus, da die Fahrpedalstellung größer als 90 % ist. Die hinterlegte Normalfunktion der Steuerung führt mit dem abgelegten Parametersatz zum Zeitpunkt t2 noch nicht zum Anfahren des Kraftfahrzeuges. Setzt sich das Fahrzeug trotz des Anfahrwunsches innerhalb einer vorgebbaren Beobachtungszeit nicht in Bewegung, so werden durch den Anfahrbeobachter im Steuerprogramm Maßnahmen eingeleitet, die sich vom Normalbetrieb unterscheiden. Nach Ablauf dieser Beobachtungszeit wird zum Zeitpunkt t3 die Motordrehzahl erhöht, was durch die Kennlinien 3, 4 ersichtlich wird. Dies führt dazu, dass der Motor ein höheres Moment aufbauen kann als üblicherweise im Normalbetrieb notwendig ist. Zum Zeitpunkt t4 ist noch immer keine Anfahrt erfolgt, wodurch die Motordrehzahl nochmals erhöht wird. Da nach wiederholtem Erhöhen der Motorsolldrehzahl noch immer kein Anfahren erfolgt, wird zum Zeitpunkt t5 die Kupplung zwangsgeschlossen, was durch die Kennlinien 3, 5 verdeutlicht wird. Das Zwangsschließen der Kupplung erfolgt über einen vorgebbaren Zeitraum zwischen den Zeitpunkten t5 und t7. Trotz eingeleitetem Zwangsschließen der Kupplung erfolgt zum Zeitpunkt t6 noch immer keine Anfahrt, wodurch die Motordrehzahl zum Zeitpunkt t6 erneut erhöht wird. Zum Zeitpunkt t7 ist die Kupplung komplett geschlossen. Trotz mehrmaligem Erhöhen der Motorsolldrehzahl und dem Zwangsschließen der Kupplung erfolgt zum Zeitpunkt t7 noch immer keine Anfahrt, woraufhin zu diesem Zeitpunkt das Motormoment zurückgenommen wird zum Schutz der zum Anfahren benötigten Bauteile, insbesondere des Motors und der Kupplung. Das Erhöhen der Motordrehzahl kann mehrmals während eines Anfahrversuches in zyklisch vorgebbaren Abständen t3, t4, t6 wiederholt werden.

### Bezugszeichen

- 1: Fahrpedalstellung
- 2: Motormoment
- 3: Kennlinie "eingeleitete Maßnahmen"
- 4: Motorsolldrehzahl
- 5: Kupplungsposition
- 6: Diagramm

## Patentansprüche

1. Verfahren zur Überwachung eines Anfahrvorganges eines Kraftfahrzeugs mit automatisiertem Schaltsystem, welches einen Antriebsstrang aufweist, mit einem Antriebsmotor, einem Drehmomentübertragungssystem, einem Getriebe, einer Steuereinheit und einem von der Steuereinheit gesteuerten Aktuator zur Betätigung des Drehmomentübertragungssystems, mit folgenden schritten.
a) Erkennen, ob eine Anfahrt erwünscht ist, beispielsweise auf Grund einer Fahrpedalbetätigung;
b) Erkennen, ob nach einem eindeutigen Anfahrwunsch eine Anfahrt erfolgt;
c) falls trotz Anfahrwunsch keine Anfahrt erfolgt: Anheben der Motordrehzahl und gegebenenfalls leichtes Öffnen des Drehmomentübertragungssystems, was in der Regel dazu führt, dass der Antriebsmotor ein höheres Moment aufbauen kann als üblicherweise in einem Normalbetrieb notwendig ist; **dadurch gekennzeichnet, dass** folgende Schritte durchlaufen werden:
d) Prüfen, ob mit den eingeleiteten Maßnahmen eine Anfahrt erfolgt und wiederholen des Schrittes c), falls keine Anfahrt erfolgt ist;
e) Zwangsschließen des Drehmomentübertragungssystems nach einer vorgebbaren Zeitdauer, falls durch die unter Schritt c) eingeleiteten Maßnahmen noch immer keine Anfahrt erfolgt, wodurch das am Antriebsmotor anliegende höhere Drehmoment zügig an die Räder des Kraftfahrzeuges übertragen wird, wobei ein im Normalbetrieb geregelter Vorgang durch einen gesteuerten Vorgang ersetzt wird;
f) Schutz der zum Anfahren benötigten Bauteile vor Zerstörung, insbesondere den Antriebsmotor und das Drehmomentübertragungssystem, falls die im Schritt c) und e) eingeleiteten Maßnahmen nicht zum Anfahren des Kraftfahrzeuges führen, wobei nach einer vorgebbaren Zeitdauer und/oder beim Überschreiten eines Schwellwertes für eine eingetragene Kupplungsenergie das Motormoment per Motoreingriff über beispielsweise einen Datenbus zurückgenommen wird;
g) Rücksetzen eines fehlgeschlagenen Anfahrvorganges durch Zurücknahme der Fahrpedalbetätigung;
h) Ermöglichen erneuter Anfahrversuche.

## Claims

1. Method for monitoring a starting operation of a motor vehicle with an automated gearshift system, which motor vehicle has a drive train, with a drive engine, a torque transmission system, a gearbox, a control unit and an actuator which is controlled by the control unit for actuating the torque transmission system, having the following steps:
a) detecting whether starting is desired, for example on the basis of an accelerator pedal actuation;
b) detecting whether starting has taken place after an unambiguous starting request;
c) if starting has not taken place despite a starting request: raising of the engine speed and optionally slight opening of the torque transmission system, which as a rule leads to the drive engine being able to build up a higher moment than is usually necessary in normal operation; **characterized in that** the following steps are run through:
d) checking whether starting takes place by way of the initiated measures and repetition of step c) if starting has not taken place;
e) positive closure of the torque transmission system after a predefinable time duration, if starting still has not taken place as a result of the measures initiated under step c), as a result of which the higher torque which prevails at the drive engine is transmitted rapidly to the wheels of the motor vehicle, an operation which is regulated in normal operation being replaced by a controlled operation;
f) protection against destruction of the components which are required for starting, in particular the drive engine and the torque transmission system if the measures which are initiated in steps c) and e) do not lead to starting of the motor vehicle, the engine moment being reduced by engine intervention via, for example, a data bus after a predefinable time duration and/or if a threshold value for input clutch energy is exceeded;
g) resetting of a failed starting operation by cancellation of the accelerator pedal actuation;
h) making new starting attempts possible.

## Revendications

1. Procédé de surveillance d'une opération de démarrage d'un véhicule automobile avec un système de changement de vitesse automatisé comportant une chaîne de transmission, avec un moteur d'entraînement, un système de transmission de couple de rotation, une boîte de vitesses, une unité de commande et un actionneur commandé par l'unité de commande pour l'entraînement du système de transmission de couple de rotation, comportant les étapes suivantes :
a) reconnaissance de si un démarrage est souhaité, par exemple en raison d'un actionnement de la pédale d'accélérateur ;
b) reconnaissance de si un désir de démarrage clair est suivi dans les faits d'un démarrage ;
c) si malgré le désir de démarrage, aucun démarrage ne se produit : augmentation du régime moteur et le cas échéant légère ouverture du système de transmission de couple de rotation, ce qui permet généralement d'augmenter plus le couple du moteur d'entraînement que nécessairement en mode normal ;
d) vérification de si les mesures prises permettent un démarrage et répétition de l'étape c) si aucun démarrage ne se produit ;
e) fermeture contrainte du système de transmission de couple de rotation après une durée prédéfinie, si les mesures prises à l'étape c) ci-dessus ne produisent toujours pas de démarrage, le couple de rotation plus élevé au niveau du moteur d'entraînement étant rapidement transmis aux roues du véhicule automobile, une opération prévue en mode normal étant alors remplacée par une opération commandée ;
f) protection des composants nécessaires au démarrage afin d'éviter toute destruction, notamment le moteur d'entraînement et le système de transmission de couple de rotation, si les mesures prises aux étapes c) et e) ne provoquent pas un démarrage du véhicule automobile, sachant qu'après une certaine période de temps et/ou en cas de dépassement d'une valeur seuil pour une énergie d'embrayage appliquée, le couple moteur est repris par engrenage du moteur par l'intermédiaire par exemple d'un bus de données ;
g) réinitialisation d'une opération de démarrage ayant échoué par reprise de l'actionnement de la pédale d'accélérateur ;
h) possibilité de réaliser de nouveaux essais de démarrage.
